# EUROPEAN PATENT APPLICATION

(11) **EP 1 973 125 A1**
(43) Date of publication of application: **24.09.2008**
(21) Application number: 06711678.0
(22) Date of filing: 13.01.2006
(51) Int. Cl.: H01F 27/24, H01B 3/20, H02K 1/18

(54) **CORE MEMBER OF MAGNETIC STRUCTURE BODY**

(71) Applicant: AISIN SEIKI KABUSHIKI KAISHA, Kariya-shi, Aichi 448-8650 (JP)
(72) Inventor: KOBAYASHI, Hiroshi, Kariya-shi, Aichi 448-8650 (JP)
(74) Representative: TBK-Patent
(86) International application number: PCT/JP2006/300393
(87) International publication number: WO 2007/080650

(57) **Abstract**

In a core member for a magnetic structure having an insulating coating having high exfoliation resistance and having corrosion resistance, the core member comprises a coating layer 4 of electrically insulating oil having a polar group, the coating layer 4 being provided on a surface of a steel member 2, the polar group being bonded, via a coupling agent, the steel member 2.

## Description

### TECHICAL FIELD

The present invention relates to a core member for a magnetic structure.

### BACKGROUND ART

A core member for a magnetic structure is used as e.g. a core member in a motor, a transformer, etc. It is known that the core member, during its use, suffers a loss due to eddy current. Eddy current is generated in association with application of an alternating magnetic field to conductive ferromagnetic material. Joule heat generated by this eddy current is referred to as eddy current loss, which is a loss in output in the case of a motor. Also, when the core member is used with a conductive wire wound thereabout, if a large amount of heat is generated due to the eddy current loss, this results in thermal degradation of insulating coating material on the conductive wire.

Generally, an eddy current loss Wₑ per unit time, unit volume of a thin plane is expressed as: Wₑ = k₂f²D²Bₘ²/ρ, where f is a frequency of an alternating magnetic field, D is a plate thickness, Bₘ is a maximum magnetic flux density, p is an electric resistance, and k₂ is a constant (=π²/6). That is, for a same kind of material, the smaller the thickness, the smaller the eddy current loss. For this reason, the conventional core members would employ as a steel member thereof, a steel plate stack comprised of a plurality of thin steel plates stacked together, with insulation being provided between adjacent individual steel plates.

With such steel plate stack, no insulation is provided on the top and bottom faces of the steel plate stack or the lateral face of each individual steel plate. Therefore, when this is used as a core member having conductive wire wound thereabout, electric conduction is established between the adjacent steel plates, thus resulting in large eddy current loss. For this reason, there have been studied a variety of insulating techniques for the steel plate and steel plate stack.

As such insulating technique, there has been disclosed a technique according to which to a mixture of one or more kinds of polyamide resin, polyvinyl acetal resin, polyvinyl chloride acetate copolymer, and synthetic rubber, one or more kinds of thermoset resin is/are added, the resultant mixture is dissolved with a solvent to provide a process liquid, this process liquid is then continuously applied by means of a roll or a spray, to a steel plate, the applied plates is then dried in a drying oven, thereafter, the steel plate is taken up into the form of a coil (see e.g. Patent Document 1).

There have been proposed a further technique according to which mixture solution of acrylic resin emulsion and water-soluble styrene-maleic acid copolymer is continuously applied with roll coating or spraying to a steel plate and the resultant coating film is baked incompletely into the surface thereof (see e.g. Patent Document 2), and a still further technique according to which when a plurality of steel plates each having, on the surface thereof, a coating which provides adhesive property upon heating of the surface, are stacked to form a core, and immediately after or before the steel plates are treated and stacked, mainly the coating is heated by a local heating means to cause the coating to provide its adhesive property, so as to adhere the stacked steel plates to each other entirely or partially, thus integrating/ solidifying the core (see e.g. Patent Document 3).

There has been studied still another technique. According to this, in an electric motor including a stator comprised of a plurality of electromagnetic thin steel plates stacked together and a number of wires wound about the core through a plurality of slots formed in the core, the cylindrical core is submerged in an insulating agent in its molten state so as to form a coating of this insulating agent on the core surface (see e.g. Patent Document 4).
Patent Document 1: Japanese Patent Published No. 49-33491
Patent Document 2: Japanese Patent Published No. 55-9815
Patent Document 3: Japanese Patent Application "Kokai" No. 10-261535
Patent Document 4: Japanese Patent Application "Kokai" No. 11-206076

### DISCLOSURE OF THE INVENTION

### PROBLEM TO BE SOLVED BY THE INVENTION

According to the techniques disclosed in Patent Documents 1-4 in which an insulating resin coating is formed on a steel plate or a steel plate stack, the steel plate (or stack) and the insulating resin coating are bonded to each other with a physical bonding force attributable to the anchoring effect of the resin to the unevenness in the surface of the steel plate. For this reason, when a mechanical stress is applied to the steel plate, the insulating coating tends to be removed therefrom. In particular, in case the core member for a magnetic structure is employed as e.g. a core member of a motor and a wire is wound thereabout to form a coil, in the course of the wire winding operation, the conductive wire comes into contact with the insulating coating, thereby applying a stress thereto, which may result in exfoliation of the insulating coating.

Further, for improvement in the mechanical strength of the insulating coating, the art has tried a method in which particles of a composite material comprised of silica particles and epoxy resin are sprayed and baked in a thickness of about 0.5 mm, thereby forming an insulating coating and a further method in which a 6,6-Nylon resin component having about 0.8 mm thickness and reinforced with glass fiber is press-fitted to a steel plate stack vertically.

However, in case conductive wire is wound about a core member of a magnetic structure and an electric current is applied thereto to generate a magnetic field, the magnetic field generated is greater when the wire is wound in higher density. That is, if the thickness of the insulating coating is reduced, this results in increase in the mounting volume of the coil with wire wound thereabout, hence, resulting in increase in the magnetic field generated thereby. Also, the magnetic field generated from the conductive wire is transmitted to the magnetic structure core member in an more efficient manner when the insulating coating is formed thinner. Therefore, in case the core member for a magnetic structure is used as a core member of a motor for instance, the smaller the thickness of the insulating coating, the greater or better the output of the motor. Accordingly, if a non-magnetic layer having a thickness of from about 0.5mm to 0.8 mm is formed between the core member and the conductive wire, it becomes impossible to wind the wire about the core member in a high density, the impossibility leading to reduction in the magnetic field to be generated as well as greater difficulty of transmission of the generated magnetic field to the core member for the magnetic structure. Hence, in the case of its application in a motor for instance, its output will be reduced disadvantageously

Further, with such insulating layer, the layer mixedly contains hard substance such as silica particles or glass fibers in order to obtain improved mechanical strength. Therefore, in the course of the wire winding operation, the hard substance can adversely affect the insulating coating material of the wire.

On the other hand, as the steel plate stack is directly exposed to the atmosphere during its use as a core member in a magnetic structure, there is another problem of corrosion thereof due to e.g. moisture vapor present in the atmosphere. Regarding such problem as this, the insulating resin coating and the insulating layer formed by applying and baking of particles of the composite material consisting of silica particles and epoxy resin, suffer the problem of a structural defect such as pinholes. Further, in the case of the method involving press-fitting of the glass-fiber reinforced 6,6-Nylon resin component, there occurs permeation of moisture vapor due to the moisture vapor permeability inherent in the 6,6-Nylon resin per se as well as through the gap between the steel plate stack and the resin component press-fitted thereto. Therefore, the corrosion resistance was insufficient with the conventional coating

The present invention has been made in view of the above-described problems. The object of the invention is to provide a core member for a magnetic structure, having an insulating coating having high resistance against exfoliation as well as corrosion resistance.

### MEANS TO ACHIEVE OBJECT

For accomplishing the above-noted object, according to a first characterizing feature of a core member for a magnetic structure relating to the present invention, the core member comprises a coating layer of electrically insulating oil having a polar group, the coating layer being provided on a surface of a steel member, the polar group being bonded, via a coupling agent, the steel member.

That is, according to this construction, the steel member can be coated with a membrane of the electric insulating oil, so that electric insulation can be ensured.

As the coating of the electric insulating oil is bonded with the steel member via a coupling agent, there can be provided a greater bonding strength between the electric insulating oil coating and the steel member, thus restricting exfoliation of the electric insulating oil coating from the steel member. Therefore, if the core member for a magnetic structure is used e.g. as a core member for a motor and conductive wire is wound thereabout to form a coil, even when a stress is applied to the coating of electric insulating oil in the course of the winding operation, exfoliation of the electric insulating oil can be prevented. Further, as to the stress exerted to the wire during the winding operation also, this stress may be absorbed by deformation of the electric insulating oil coating, so that damage to the wire by winding of an insulating coating material thereon can be prevented also. In these ways, it is possible to ensure insulation of the magnetic structure core member as well as the conductive wire.

Further, as the electric insulating oil coating is formed as a coating of micron order, when the wire is wound about the magnetic structure core member, this can be wound in a high density, thus allowing a large mounting volume for the coil.

Moreover, the electric insulating oil coating is a continuous coating free from such structural defect as pinholes and has high resistance against moisture permeability. So, even after a long-time use as a core member for a magnetic structure, corrosion thereof due to e.g. moisture vapor present in the air hardly occurs.

According to a second characterizing feature of the core member for a magnetic structure relating to the present invention, the steel member includes more than one steel plate, the more than one steel plate being stacked, the one steel plate being formed on its surface with the coating layer.

That is to say, according to this construction, by stacking steel plates individually insulated, there is provided a preferred embodiment of the core member for a magnetic structure having high insulating performance.

According to a third characterizing feature of the core member for a magnetic structure relating to the present invention, the steel member includes a plurality of stacked steel plates.

That is to say, according to this construction, by using a steel plate stack comprised of a plurality of steel plates stacked together, there is provided a preferred embodiment of the core member for a magnetic structure having high insulating performance.

According to a fourth characterizing feature of the core member for a magnetic structure relating to the present invention, said electrically insulating oil having a polar group comprises at least kind of compound selected from the group consisting of polyolefin, polyol ester, diester, and polyether.

That is to say, according to this construction, since the above compound has a high insulating resistance, there is provided a preferred embodiment of the core member for a magnetic structure having high electric insulating performance.

According to a fifth characterizing feature of the core member for a magnetic structure relating to the present invention, said coupling agent comprises at least kind of compound selected from the group consisting of silane coupling agent and titanium coupling agent.

That is to say, according to this construction, it is possible to increase the bonding strength between the steel member and the polar group, thus providing greater resistance against exfoliation of the electric insulating oil coating from the steel member.

According to a sixth characterizing feature of the core member for a magnetic structure relating to the present invention, said silane coupling agent comprises a compound including an imidazole group and an alkoxy silyl group.

That is to say, according to this construction, it is possible to increase the bonding strength between the steel member and the polar group, thus providing greater resistance against exfoliation of the electric insulating oil coating from the steel member.

According to a seventh characterizing feature of the core member for a magnetic structure relating to the present invention, said imidazole group and said steel member are coordinate-bonded with each other.

That is to say, according to this construction, as carbon atoms in the imidazole group form a complex with the steel member through a coordinate bond similar to a covalent bond, there is provided a preferred embodiment of the core member for a magnetic structure having greater resistance against exfoliation of the electric insulating oil coating from the steel member.

According to an eighth characterizing feature of the core member for a magnetic structure relating to the present invention, said alkoxy silyl group is formed into a silanol group through a hydrolysis and said silanol group is bonded with at least one of said steel member and said polar group.

That is to say, according to this construction, since the silanol group can be bonded strongly with both the surface of the steel member and the polar group, there is provided a preferred embodiment of the core member for a magnetic structure having greater resistance against exfoliation of the electric insulating oil coating from the steel member.

According to a ninth characterizing feature of the core member for a magnetic structure relating to the present invention, said compound forms a molecular film through a condensation polymerization reaction of a silanol group generated by a hydrolysis of said alkoxy silyl group

That is to say, according to this construction, the compound including an imidazole group and an alkoxy silyl group can, by itself, form, on the surface of the steel member, a dense molecular film having a network structure of siloxane, through the condensation polymerization reaction of the silanol group. Therefore, it is possible to improve the corrosion resistance of the core member for the magnetic structure.

### BEST MODE OF EMBODYING THE INVENTION

According to a core member for a magnetic structure relating to the present invention, the core member comprises a coating layer of electrically insulating oil having a polar group, the coating layer being provided on a surface of a steel member, the polar group being bonded, via a coupling agent, the steel member. With this, the steel member can be coated with the coating of electric insulating oil, so that electric insulation can be ensured.

As the coating of electric insulating oil is bonded with the steel member via the coupling agent, it is possible to increase the bonding strength between the electric insulating oil coating and the steel member, thus providing greater resistance against exfoliation of the electric insulating oil coating from the steel member. In case the core member for a magnetic structure is used as e.g. a core member for a motor and conductive wire is wound thereabout to form a coil, even when a stress is applied to the electric insulating oil coating in the course of the winding operation, there occurs no exfoliation of the electric insulating oil coating. Also regarding the stress applied to the wire during the winding operation, as this stress is absorbed by deformation of the electric insulating oil coating, damage to the insulating coating of the wire can be avoided. In these ways, the electric insulation of the core member of the magnetic structure and the conductive wire can be ensured.

Further, the electric insulating oil coating is formed as a coating of micron order on the surface of the steel member, whose thickness is smaller than the thickness of a few tens of µm of the insulating coating of the wire and is about 1/50 to 1/100 of the thickness of the conventional insulating layer. For this reason, the wire can be wound in high density about the core member of the magnetic structure, thus ensuring a large mounting volume for the coil.

Moreover, the electric insulating coating is formed as a continuous coating free from such structural defects as pinholes and highly resistant against permeation of moisture. Hence, even if used for an extended period as a core member for a magnetic structure, corrosion thereof due to e.g. moisture vapor in the air can be restricted.

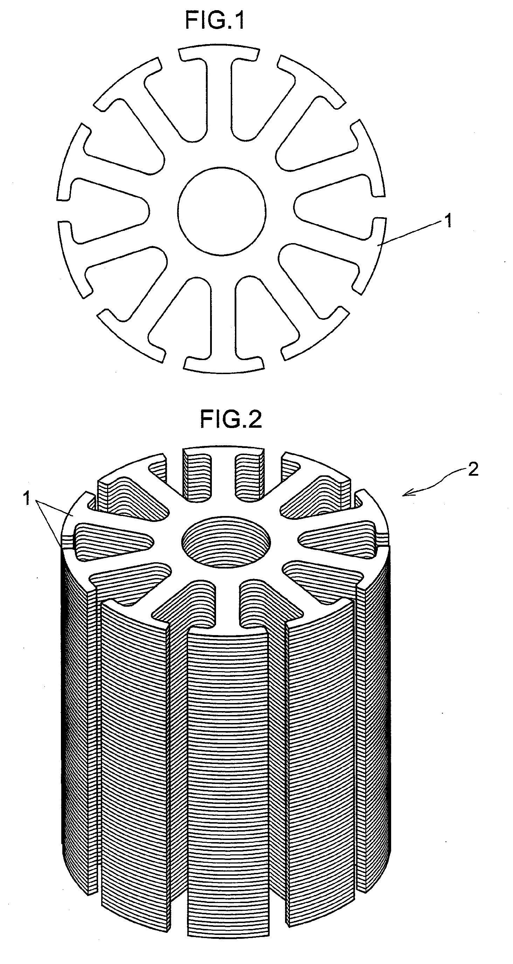

The steel member used in the core member for a magnetic structure relating to the present invention is not particularly limited, but can be any conventional steel member suitably selected. For instance, when the core member for a magnetic structure is employed as a core member for a motor, it is possible to employ, as the steel member, a steel plate 1 having a shape shown in FIG. 1 and a thickness of about 1 mm. When such steel plate 1 is to be used, first, the coating of the electric insulating oil is formed on the surface of the steel plate 1; then, a plurality of such steel plates 1 are stacked to be used as a core member for a magnetic structure. Also, the steel member of the core member for a magnetic structure can be a steel plate stack 2 comprised of a plurality of stacked steel plates 1, as shown in FIG. 2. With this steel plate stack 2, the gaps between adjacent steel plates 1 have been filled with oil in advance during the manufacturing process, so that electric insulation is maintained. The steel plate 1 can be any conventionally known steel plate. Some specific examples are rolled steel plates such as a cold-rolled steel plate, a hot-rolled steel plate, a magnetic steel plate, etc. The shape of the steel plate 1 is not limited to the shape shown in FIGs. 1 and 2, but any shape can be selected, depending on the use.

The electric insulating oil having a polar group is not particularly limited. Any electric insulating oil having a polar group can be selected as desired. Some examples of electric insulating oil are such compounds as polyolefin, polyol ester, diester, polyether, etc. Further, even a compound not having any polar group inherently can be used as the "electric insulating oil" in the present invention, with introduction of a polar group thereto. Some examples of the polar group are a hydroxyl group, an ester group, an amide group, a carbonyl group, a cyano group, and an urethane group. The polar group is not particularly limited.

Further, as the electric insulating oil having a polar group, those having the properties shown in Table 1 in addition to the electric insulating property are particularly preferred. One such example is polyol ester. Polyol ester has high hydrophobicity, no water solubility, no moisture vapor permeability and no reactivity with metal ions, chloride ion, sulfur ion. Therefore, in case the core member for a magnetic structure relating to the present invention is employed as a core member of a motor, a core member for a magnetic structure having such properties can be used in e.g. a motor pump for circulating cooling water in a motorcar. That is, with the core member for a magnetic structure relating to the present invention, even when exposed to cooling water in a radiator of a motorcar, no corrosion of the surface of the steel member due to the cooling water occurs.

**[Table 1]**

| | |
|---|---|
| Moisture vapor permeation resistance | Permeation of moisture vapor tends to invite corrosion of steel member. |
| Hydrolysis resistance | When the core member for a magnetic structure is employed as a core member for a motor for a motorcar, the motor has a sealed construction and the maximum temperature reaches 150°C. Therefore, if hydrolysis occurs below 150°C, this results in deterioration the shielding performance from the outside and corrosion of steel member occurs, which result in deterioration in electric insulation. |
| Heat decomposition resistance | If heat decomposition occurs below 150°C, this results in deterioration the shielding performance from the outside and corrosion of steel member occurs, which result in deterioration in electric insulation. |
| Volatility resistance | If volatilization occurs below 150°C, this results in deterioration the shielding performance from the outside and corrosion of steel member occurs, which result in deterioration in electric insulation. |
| Viscosity | Viscosity allowing formation of micron-order coating by rolling method or spin-coating method is preferred. |
| pH | Acid and alkaline oils tend to corrode steel member. |

Polyol ester is produced by an esterificatiion reaction involving bonding between a polyvalent alcohol having a neopentyl structure and a fatty acid. The hydrolysis resistance of polyol ester is determined by the kind of the fatty acid. Though not limited in particular, as the fatty acid, valeric acid, isovaleric acid, hexanoic acid, heptanoic acid, octanoic acid, isooctanoic acid, 2-ethyl hexanoic acid, pelargonic acid, isononanoic acid, decanoic acid, etc. can be employed. Among these, 2-ethyl hexanoic acid is particularly preferred for its superior hydrolysis resistance. As non-limiting examples of polyalcohol providing reduced viscosity, pentaerythritol, dipentaerythritol, neopentyl glycol, etc. can be cited. With use of such polyalcohol, the normal temperature viscosity of polyol ester can be set to 40 to 50 cSt. Therefore, the steel member can be coated with a micron-order coating by the rolling or spraying technique. Incidentally, such polyol esters have a volume resistivity value of 4.4 x 10¹⁰ Ω·cm, hence high insulating characteristics.

The coupling agent for bonding the steel member and the polar group of the electric insulating oil is not particularly limited. Such agents having high boiling point and hydrophobicity are preferred. As such coupling agent, it is possible to employ e.g. silane coupling agent, titanium coupling agent, etc.

As an example of the silane coupling agent, a compound having an imidazole group and an alkoxy silyl group can be cited. This compound is bonded with the steel member through a process involving hydrogen bonding of a silanol group produced with hydrolysis of the alkoxy silyl group to the surface of the steel member, coordination of nitrogen in the imidazole group in the surface of the steel member and subsequent covalent bonding thereto to form a complex. Further, its bonding with the electric insulating oil forming the coating occurs through an interaction between the polar group and the silanol group produced by the hydrolysis. Furthermore, this compound per se having an imidazole group and an alkoky silyl group is capable of forming a dense molecular film having a siloxane network structure on the steel member surface through a condensation polymerization reaction of a silanol group generated. Incidentally, the imidazole group not only bonds by itself with the steel member, but also acts as a catalyst in the hydrolysis of the alkoky silyl group with the silanol group, thereby promoting the hydrogen bonding between the silanol group and the steel member as well as the bonding between the silanol group and the polar group of the electric insulating oil, and promoting also the condensation polymerization reaction of the silanol group. For this reason, the production of the silanol group through the hydrolysis of the alkoky silyl group and the condensation polymerization reaction of the silanol group can be completed at a relative low temperature starting from the room temperature to 120°C approximately.

The compound having an imidazole group and an alkoky silyl group is not particularly limited. For instance, compounds having Formulae (1) and (2) below can be employed. In Formulae (1) and (2) below, R₁, R₂, R₃ respectively are alkyl groups such as methyl, ethyl, propyl, butyl, etc., and R₁, R₂, R₃ can be same or different. Also, the imidazole group and the alkoky silyl group are bonded through an alkyl chain having one or more carbon atoms. Incidentally, in case the compound has a hydroxyl group as shown by Formula (2), in addition to the imidazole group and the silanol group, the hydroxyl group too interacts with the polar group of the electric insulating oil, so that the bonding strength between the electric insulating oil and the steel member can be further increased. Also, the thermal decomposition of the compound of Formula (2) starts at a temperature range over 300°C, hence, this composition has superior heat stability as a coupling agent.

[Formula 1]
[Formula 2]

Further, as examples of titanium coupling agent, compounds shown by Formulae (3) through (5) below can be cited. Via such compounds, the steel member and the polar group of the electric insulating oil can be bonded favorably.

[Formula 3]
[Formula 4]
[Formula 5]

The core member for a magnetic structure having the electric insulating oil coating on the surface of the steel member can be manufactured by e.g. the following method, taking for an example, a case of using polyol ester as the electric insulating oil and the silane coupling agent of Formula (1) as the coupling agent thereof. First, a solution is prepared by mixing in a solvent the silane coupling agent at a concentration of about 0.2 wt%. In this solution, the steel member which has been degreased and cleaned in advance is submerged for about 30 minutes so as to allow the silane coupling agent to be adsorbed to the surface of the steel member. Next, this steel member is kept submerged for about 1 hour in polyol ester solution heated to from 80 to 130°C and then the solvent is evaporated and the polyol ester and the silane coupling agent are chemically reacted with each other, thereby bonding the polyol ester to the steel member surface via the silane coupling agent. Thereafter, the core is kept for about 1 hour within an atmosphere of 2 to 3 mmHg, so as to remove the solvent. With this, on the surface of the steel member, a polyol ester coating having a thickness of about 10µm can be formed.

The solvent used for dissolving the silane coupling agent in the manufacturing method of the core member for a magnetic structure relating to the present invention can be freely selected from toluene, xylene, methyl ethyl ketone, ether, dichloromethane, alcohol, etc. But, for bettering the corrosion resistance, solvent having no hygroscopicity, such as toluene, xylene, methyl ethyl ketone, ether, dichloromethane, etc. is preferred. For example, if toluene is employed as the solvent, a treatment at 130°C for about 30 minutes can evaporate the toluene and can also promote the condensation polymerization reaction of the silanol group.

Further, similarly, it is preferred that the silane coupling agent be a silane coupling agent shown by Formula (1) having no hydroxyl group which has no hygroscopicity, and it is also preferred that the solvent be removed as much as possible so as not to be left within the coating of the electric insulating oil.

Such core member for a magnetic structure as described above can be used advantageously as a core member of a motor, a transformer (a static apparatus), etc. When the core member is employed as a core member of a motor, as the steel member, as shown in FIG. 2, it is possible to employ a steel plate stack 2 which is formed by stacking and caulking steel plates 1 manufactured by the conventional method and then clean it for removing oil adhered thereto in the manufacturing process and then form on its surface the coating of the electric insulating oil. The core member thus manufactured will be used with conductive wire being wound thereabout. If the core member for a magnetic structure relating to the present invention is employed as a core member of a motor, it is possible to increase the mounting density of the conductive wire and also to allow efficient transmission of magnetic field, so that the output of the motor can be increased. If a steel plate 1 is used as the steel member, this will be punched into a predetermined shape such as one shown in FIG. 1 by the conventional method and then any oil adhering thereto will be cleaned and removed. Thereafter, the coating of the electric insulating oil is formed on its surface. Then, a plurality of such steel plates 1 are stacked together to complete the core member for a motor.

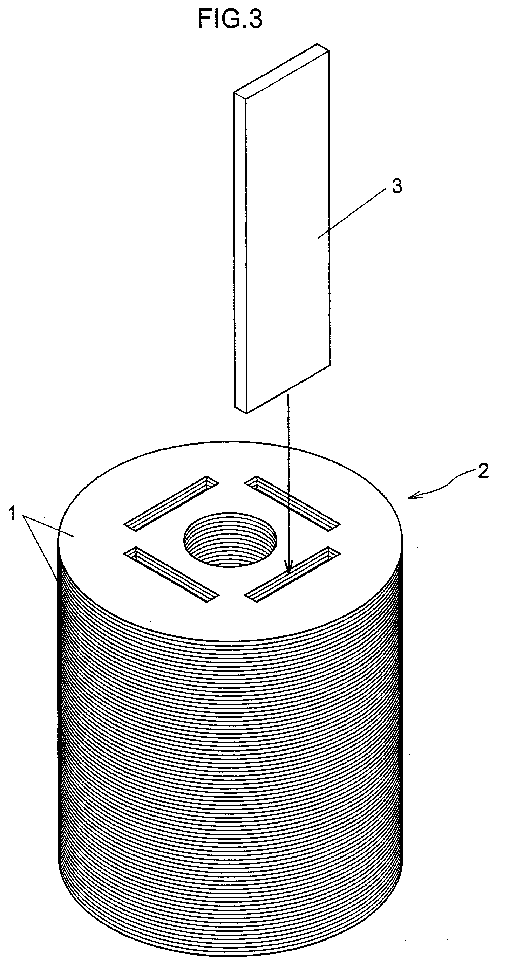

Furthermore, as the steel member, it is also possible to use a modified steel plate stack 2 shown in FIG. 3 having permanent magnets 3 embedded therein and have the electric insulating oil coating formed on its surface. This core member for a magnetic structure has good corrosion resistance also. Therefore, in the field of motorcars, for instance, this can be used for an extended period of time as a core member for a water pump motor being submerged within the radiator of a motorcar. Such core member for a magnetic structure can be obtained by stacking steel plates, e.g. cold-rolled steel plates each punched into a predetermined shape as one shown in FIG. 3 to make a steel plate stack 2, degreasing the steel plate stack 2 and embedding the permanent magnets 3 therein and forming the electric insulating coating thereon. Incidentally, in case the core member is employed especially in boiling water, the corrosion resistance can be improved by further coating the magnetic structure core member coated with the electric insulating oil with a rubber layer of e.g. butyl rubber.

### EXAMPLE

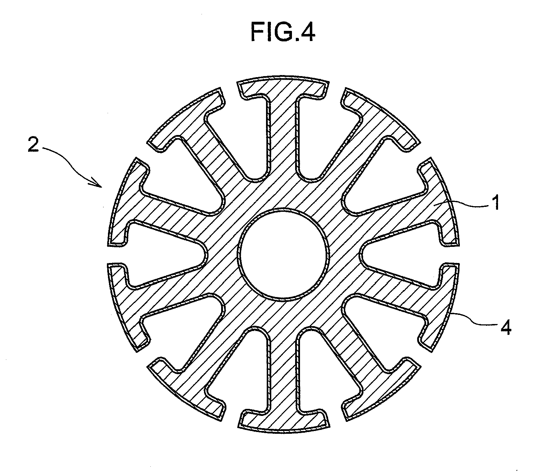

Next, there will be explained an example using, as the steel member, the steel plate stack 2 shown in FIG. 2 formed by stacking cold-rolled steel plates having 1 mm thickness as the steel plates 1.
The core member for a magnetic structure was manufactured by the above-described method with using a polyol ester having properties shown in Table 2 as the electric insulating oil having a polar group and the compound shown by Formula (1) as the coupling agent. On this core member, tests shown in Table 3 were conducted. Incidentally, it was confirmed that on the manufactured core member for a magnetic structure, coatings 4 of the electric insulating oil were formed on the top and bottom faces of the steel plate stack 2 as well as on the perimeter of the individual steel plate 1 shown in FIG. 4.

**[Table 2]**

| Item | Analysis value |
|---|---|
| Dynamic viscosity 40°C (mm²/s) | 46.8 |
| Dynamic viscosity 100°C (mm²/s) | 6.32 |
| Viscosity index | 80 |
| Density 25°C (g/cm³) | 0.964 |
| Complete oxidation (mgKOH/g) | 0.08 |

The test result of compactness can be used as an index indicative of shielding performance under an environment using a motor. The temperature-humidity cycling test was done, with assumption of a case the core member being used under a dew condensation condition. More particularly, this testing was to evaluate the shielding condition when the core member was exposed to an environment of a temperature-humidity cycling in which the core member is heated from 25°C to 85°C within 0.25 hrs under humidity of 85% R.H, and kept for 6 hours at 85°C and then cooled to -30°C within 0.5 hrs and then heated to 25°C within 0.25 hrs and kept at 25°C for 2 hours. The boiling test was done, with assuming such case when the core member is submerged in cooling water of a radiator of a motorcar, to evaluate the water moisture vapor permeability.

The reactivity test was done to study whether reaction is developed in the core member to cause its corrosion or not. The pressurized oxygen LLC solution submersion test was done, assuming such case where the core member is used as being submerged in cooling water of motorcar radiator and antifreeze liquid contained in this cooling water is oxidized. In this test, oxygen gas under 2 atmospheres was forcibly introduced to the LLC solution and processed for a predetermined period at 100°C or higher, then, the reactivity of the core member to the forcibly oxidized LLC solution was evaluated. The ionic liquid submersion test was done with assuming a case where the core member is used as being submerged in cooling water of motorcar radiator and antifreeze liquid contained in this cooling water mixedly contains metal ion, acid ion or the like as a result of corrosion of the radiator per se. In this test, Cu²⁺ ion was employed as a metal ion and Cl⁻ ion and SO₄²⁻ ion were employed as acid ions to prepare an aqueous solution having the respective ions dissolved therein at predetermined concentrations and the reactivity to this aqueous solution was evaluated.

**[Table 3]**

| Tested item | | Testing condition |
|---|---|---|
| Compactness | Temperature-humidity cycling test | Continuous 20 temperature-humidity cycles |
| | Boiling test | Boiling for 240 hours in 100°C boiling water |
| Reactivity | Pressurized oxygen LLC solution submersion test | Submerged for 480 hours in pressurized oxygen LLC solution at 95°C |
| | Ionic liquid submersion test | Submerged for 480 hours in ionic solution at 95°C |

As results, no change in the surface of the core member was observed in any of the tests done,
As shown above, it was found that in all the cases above, the core member for a magnetic structure relating to the present invention had improved corrosion resistance over the conventional ones.
Further, the resistance formed by the polyol ester coating was determined, with setting the diameter of the steel plate stack at 50 mm, the ratio of the effective area at 0.2 and thickness of the polyol ester coating at 10 µm, which produced a result of 11.2 mΩ, showing high insulating performance.

### INDUSTRIAL APPLICABILITY

Thanks to its distinguished electric insulation and corrosion resistance, the core member for a magnetic structure relating to the present invention can be used not only in various conventional applications such as a core member of a motor, a transformer, etc, but also in new applications which conventionally did not allow application of the core member of a magnetic structure thereto.

### BRIEF DESCRIPTION OF THE DRAWINGS

[FIG. 1] is a view showing one example of a steel member relating to the present invention,
[FIG. 2] is a view showing another example of the steel member relating to the present invention,
[FIG. 3] is a view showing still another example of the steel member relating to the present invention, and
[FIG. 4] is a cross section of a core member for a magnetic structure relating to the present invention.

### DESCRIPTION OF REFERENCE MARKS

- 1.: steel plate (steel member)
- 2: steel plate stack (steel member)
- 4: coating layer of electric insulating oil

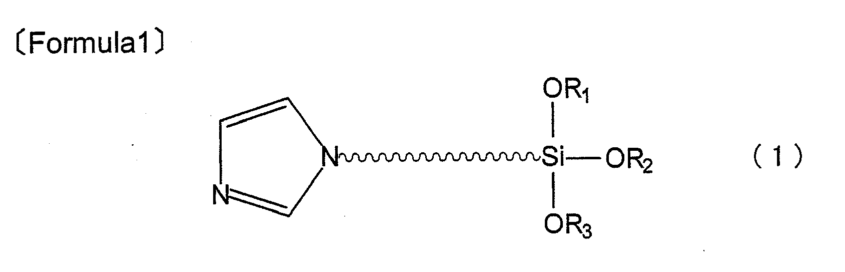

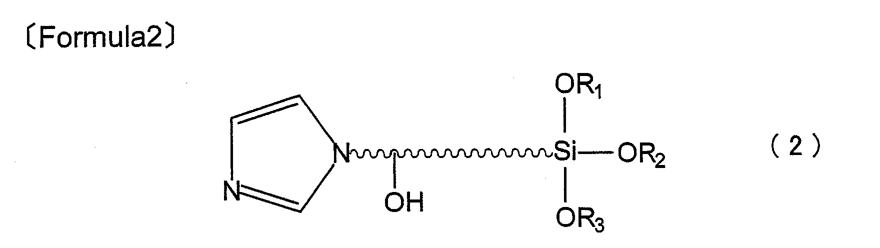

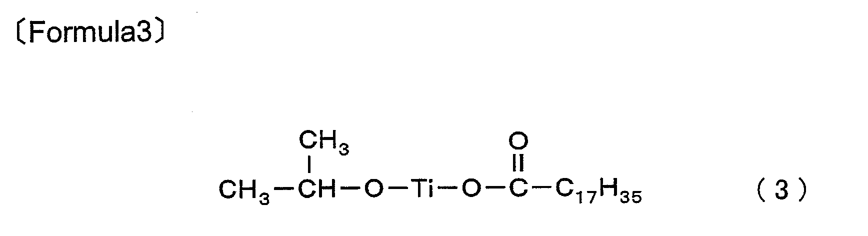

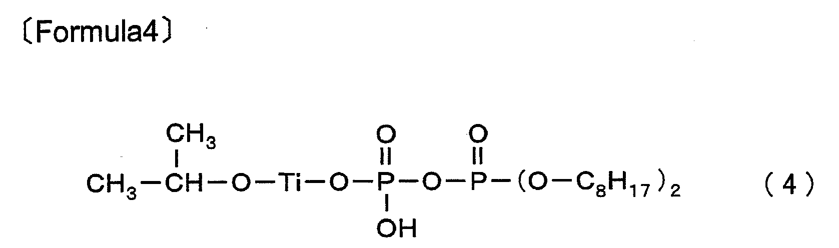

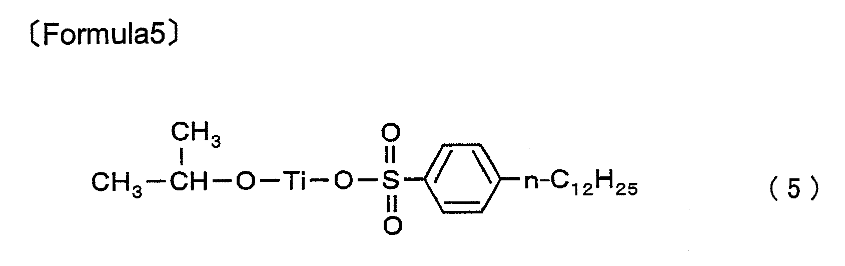

## Claims

1. A core member for a magnetic structure comprising a coating layer of electrically insulating oil having a polar group, the coating layer being provided on a surface of a steel member, the polar group being bonded, via a coupling agent, the steel member.

2. The core member for a magnetic structure according to claim 1, wherein the steel member includes more than one steel plate, the more than one steel plate being stacked, the one steel plate being formed on its surface with the coating layer.

3. The core member for a magnetic structure according to claim 1, wherein the steel member includes a plurality of stacked steel plates.

4. The core member for a magnetic structure according to claim 1, wherein said electrically insulating oil having a polar group comprises at least kind of compound selected from the group consisting of polyolefin, polyol ester, diester, and polyether.

5. The core member for a magnetic structure according to claim 1, wherein said coupling agent comprises at least kind of compound selected from the group consisting of silane coupling agent and titanium coupling agent.

6. The core member for a magnetic structure according to claim 5, wherein said silane coupling agent comprises a compound including an imidazole group and an alkoxy silyl group.

7. The core member for a magnetic structure according to claim 6, wherein said imidazole group and said steel member are coordinate-bonded with each other.

8. The core member for a magnetic structure according to claim 6, wherein said alkoxy silyl group is formed into a silanol group through a hydrolysis and said silanol group is bonded with at least one of said steel member and said polar group.

9. The core member for a magnetic structure according to claim 6, wherein said compound forms a molecular film through a condensation polymerization reaction of a silanol group generated by a hydrolysis of said alkoxy silyl group.
